# EUROPÄISCHE PATENTSCHRIFT

(11) **EP 0 825 048 B1**
(45) Veröffentlichungstag und Bekanntmachung des Hinweises auf die Patenterteilung: **10.04.2002**
(21) Anmeldenummer: 97112143.9
(22) Anmeldetag: 16.07.1997
(51) Int. Cl.: B60J 7/10

(54) **Ringförmiges Befestigungselement**
Anular fixation element
Elément de fixation annulaire

(30) Priorität: 21.08.1996 DE 29614479 U
(43) Veröffentlichungstag der Anmeldung: 25.02.1998
(73) Patentinhaber: MBFL Fliegl GmbH, 07819 Triptis (DE)
(72) Erfinder: Fliegl, Helmut, 84565 Kastl (DE)
(74) Vertreter: Schieschke, Klaus, Dipl.-Ing.

(56) Entgegenhaltungen:
- DE-A- 1 530 648
- NL-A- 6 712 396

## Beschreibung

Die Erfindung bezieht sich auf ein ringförmiges Befestigungselement zwischen einem Gurt und einer Spannvorrichtung, nach dem Oberbegriff des Anspruchs 1.

Als allgemeiner Stand der Technik ist es bereits bekannt, dieses ringförmige Befestigungselement als rotationssymmetrischen Ring auszubilden. In diesen Ring greift der Spannhaken einer Spannvorrichtung, wonach durch Drehen des Spannhakens um seine Achse der Gurt, insbesondere der Spanngurt einer Fahrzeugplane, festgespannt wird.

Nachteilig ist bei dieser bekannten Konstruktion, daß beispielsweise bei einem verzogenen Rahmen, bei ungenauer Position des Spannhakens, bei unterschiedlicher Spanngurtlänge der Fahrzeugplane, beispielsweise infolge der Ermüdung des Stoffes oder bei durchhängendem Dachprofil eines Fahrzeugaufbaues die Spannvorrichtung nicht mehr in der Lage ist, über das ringförmige Befestigungselement die Plane in Schließstellung der Spannvorrichtung einwandfrei zu spannen und festzuzurren.

Entsprechend liegt der vorliegenden Erfindung die Aufgabe zugrunde, ein ringförmiges Befestigungselement der eingangs genannten Art so zu gestalten, daß - unabhängig von den vorgenannten Einflüssen - stets ein einwandfreies Spannen der Fahrzeugplane, beispielsweise einer Schiebegardine bei einem Kraftfahrzeugaufbau mit Hilfe der Spannvorrichtung gewährleistet ist.

Diese Aufgabe wird erfindungsgemäß dadurch gelöst, daß das Befestigungselement als ungleichschenkliges, gegenüber dem Spanngurt verstellbares Dreieck ausgebildet ist und daß jeweils ein Schenkel des Rings von dem Spanngurt umfaßt wird und der Spannhaken in die gegenüberliegende Spitze des Dreiecks eingreifbar ist.

Durch die besondere Gestaltung des ringförmigen Befestigungselements als ungleichschenkliges Dreieck sind hierbei vorteilhafterweise ohne großen baulichen Aufwand drei verschiedene Spannpositionen vorhanden, so daß in jedem Fall eine Fahrzeugplane mit Hilfe der Spannvorrichtung einwandfrei gespannt wird. Dieses Spannen erfolgt auch dann, wenn beispielsweise eine unterschiedliche Spanngurtlänge der Schiebegardine infolge Ermüdung des Stoffes, ein verdrehtes Anschweißen der Spannhaken, ein Durchhängen des Dachprofils oder ein verzogener Rahmen vorliegt.

Jeder Schenkel des ungleichschenkligen Dreiecks kann in weiterer Ausgestaltung der Erfindung eine unterschiedliche Länge aufweisen. Hierbei ist die Breite des Spanngurts vorteilhafterweise auf die größte Schenkellänge des ungleichschenkligen Dreiecks abgestellt, um den Spanngurt vor möglichen Beschädigungen zu schützen.

Nach einem anderen Merkmal der Erfindung können die aneinandergrenzenden Bereiche der Schenkel innen- und/oder außenseitig als Abrundungen ausgebildet sein, so daß Verletzungsgefahr vermieden wird. Das erfindungsgemäße ungleichschenklige Dreieck, welches als ringförmiges Befestigungselement ausgebildet ist, kann aus Flachblech bestehen, so daß eine sehr kostensparende Herstellung ermöglicht wird.

Die Erfindung wird nachfolgend anhand eines in der Zeichnung dargestellten Ausführungsbeispiels näher beschrieben. In der Zeichnung zeigen:
- Fig. 1: eine Vorderansicht eines als ungleichförmiges Dreieck ausgebildeten ringförmigen Befestigungselements;
- Fig. 2: eine Seitenansicht der Spannvorrichtung an einem Kraftfahrzeug in Schließstellung, d.h. bei festgespannter Fahrzeugplane;
- Fig. 3: die Anordnung nach Fig. 2 mit geöffneter Spannvorrichtung und lose hängender Plane;
- Fig. 4a bis c: die drei verschiedenen Einstellmöglichkeiten des erfindungsgemäßen ringförmigen Befestigungselements in Vorderansicht.

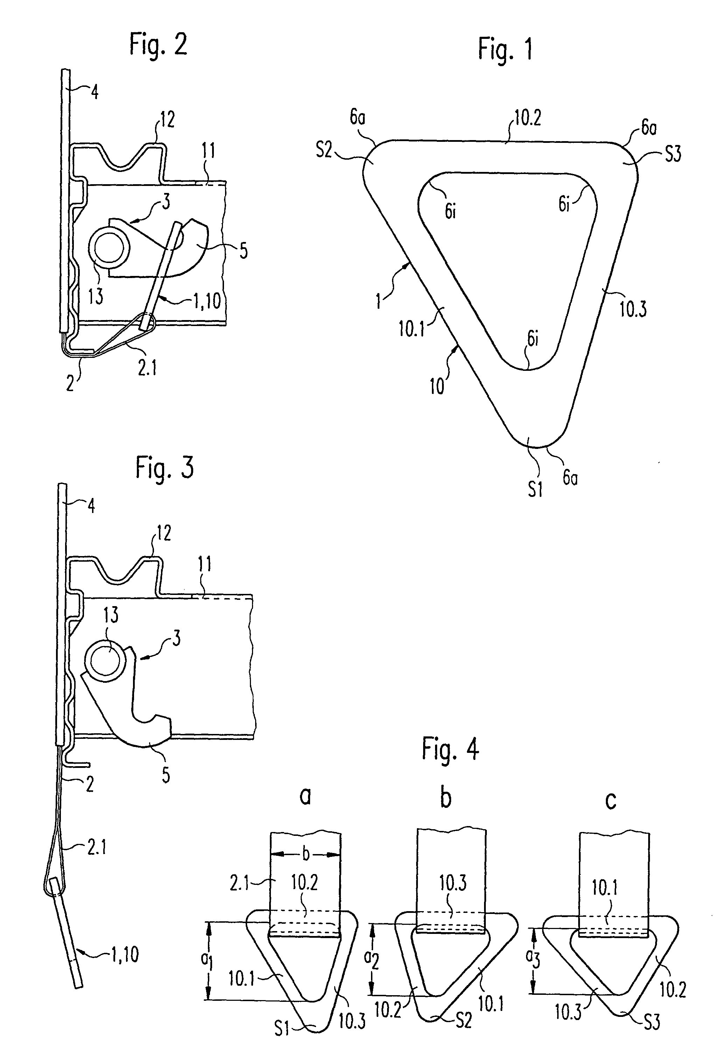

In Fig. 1 ist in Vorderansicht ein ringförmiges Befestigungselement 1 dargestellt, welches als ungleichschenkliges Dreieck ausgebildet ist mit verschieden langen Schenkeln 10.1, 10.2 und 10.3. Die Spitzen S1, S2 und S3 des ungleichschenkligen Dreiecks 10 sind als Abrundungen 6i (innen) und 6a (außen) gestaltet.

In Fig. 2 und 3 ist eine Fahrzeugplane 4 dargestellt, welche mit Spanngurten 2 und ringförmigen Befestigungselementen 1 versehen ist. Das ringförmige Befestigungselement 1 ist über eine Schlaufe 2.1 mit dem Spanngurt 2 verbunden. Die Plane 4 ist beispielsweise eine seitliche Schiebegardine an einem Fahrzeug, insbesondere einem Speditionsanhänger.

Das Fahrzeug weist einen Rahmen 11 auf, welcher mit einem Außenprofil 12 versehen ist. Im Profilraum dieses Außenprofils 12 befindet sich eine Spannvorrichtung 3, welche eine längsverlaufende Welle 13 aufweist, an der Spannhaken 5 in bestimmten Abständen angeordnet sind. Die Welle 13 ist drehbar und zwar mit Hilfe eines einzigen nicht näher dargestellten Antriebs.

In Schließstellung, d.h. nach Fig. 2 ist die Welle 13 über eine nicht näher dargestellte Arretiervorrichtung gehalten. Der Spanngurt 2 mit der Schlaufe 2.1 ist dabei um den unteren abgerundeten Bereich des Außenprofils 12 herumgeführt. Über den Spannhaken 5 sowie über das ringförmige Befestigungselement 1 und über den Spanngurt 2 ist die Fahrzeugplane 4 festgezurrt.

Erfindungsgemäß ist das ringförmige Befestigungselement nach Fig. 1 als ungleichschenkliges Dreieck 10 ausgebildet, wobei jeweils ein Schenkel 10.1 bzw. 10.2 bzw. 10.3 von der Schlaufe 2.1 des Spanngurts 2 umfaßt ist und der Spannhaken 5 in die gegenüberliegende Spitze S1 bzw. S2 bzw. S3 des ungleichschenkligen Dreiecks eingreift.

Nach Fig. 3 befindet sich die Spannvorrichtung 3 in Offenstellung, d.h. das ringförmige Befestigungselement 1, nämlich das ungleichschenklige Dreieck 10, ist nicht mehr in dem Spannhaken 5 eingehakt, sondern hängt lose innerhalb der Schlaufe 2.1 des Spanngurtes 2 nach unten.

Da gemäß Fig. 1 die Schenkel 10.1 bzw. 10.2 bzw. 10.3 des ungleichschenkligen Dreiecks 10 unterschiedliche Länge aufweisen, besteht nach Fig. 4 die Möglichkeit, drei verschiedene Betriebszustände für das ringförmige Befestigungselement 1 vorzusehen:

Nach Fig. 4a umschlingt die Schlaufe 2.1 des Spanngurtes 2 den Schenkel 10.2 des ungleichschenkligen Dreiecks 10, wobei die Spitze S1 zum Eingriff für den Spannhaken 5 vorliegt. Damit ergibt sich die größte lichte Weite a₁ zwischen dem Spanngurt 2 und der Eingriffsstelle des Spannhakens 5 an der Spitze S1.

Nach Fig. 4b wird der Schenkel 10.3 des ungleichschenkligen Dreiecks 10 von der Schlaufe 2.1 des Spanngurtes 2 umschlungen und nunmehr dient die Spitze S2 zum Eingriff des Spannhakens 5. Damit liegt eine lichte Weite a₂ vor, welche kleiner ist als die lichte Weite a₁ nach Fig. 4a.

Schließlich besteht nach Fig. 4c noch die Möglichkeit, daß der Schenkel 10.1 des ungleichschenkligen Dreiecks 10 von der Schlaufe 2.1 des Spanngurtes 2 umschlungen wird. Damit dient die Spitze S3 als Eingriffsmöglichkeit des Spannhakens 5; die lichte Weite a₃ ist geringer als die vorgenannten lichten Weiten nach Fig. 4a und 4b.

Durch die vorliegende Erfindung wird auf einfache Weise ein ringförmiges Befestigungselement 1 geschaffen, welches ein Ausgleichen der Spanngurtlänge in vertikaler Richtung ermöglicht. Es liegt damit ein sog. Nachstelldreieck vor, welches in Verbindung mit dem Spanngurt und einer Fahrzeugplane, beispielsweise einer Schiebegardine, zum Einhängen in den Spannhaken 5 einer Verriegelung dient. Diese Verriegelung kann beispielsweise als Planenzentralverriegelung ausgebildet sein.

Durch die drei verschiedenen Einhängezustände wird auch dann ein Spanngurt einwandfrei angezogen, wenn beispielsweise der Fahrzeugrahmen 11 verzogen ist, wenn ein durchhängendes Dachprofil, beispielsweise ein Obergurtprofil, vorliegt, wenn infolge Ermüdung des Stoffes unterschiedliche Spanngurtlängen vorhanden sind oder wenn der Spannhaken 5 nicht in exakter Weise mit der Welle 13 verbunden ist. Da das als ungleichschenkliges Dreieck 10 ausgebildete ringförmige Befestigungselement vorzugsweise aus Flachblech besteht, ergibt sich neben einer hohen Funktionswirksamkeit eine einfache Herstellung und eine vollkommene Wartungsfreiheit.

## Patentansprüche

1. Ringförmiges Befestigungselement (1) zwischen einem Gurt (2) und einer Spannvorrichtung (3), wobei das Befestigungselement zwischen einem Spanngurt (2) einer Fahrzeugplane (4) und einem schwenkbaren Spannhaken (5) der Spannvorrichtung (3) angeordnet ist
**dadurch gekennzeichnet,**
**daß** das Befestigungselement (1) als ungleichschenkliges, gegenüber dem Spanngurt (2) verstellbares Dreieck (10) ausgebildet ist und
**daß** jeweils ein Schenkel (10.1; 10.2; 10.3) des Rings von dem Spanngurt (2) umfaßt und der Spannhaken (5) in die gegenüberliegende Spitze (S1; S2; S3) des Dreiecks eingreifbar ist.

2. Befestigungselement nach Anspruch 1,
**dadurch gekennzeichnet,**
**daß** jeder Schenkel (10.1; 10.2; 10.3) des ungleichschenkligen Dreiecks (10) eine unterschiedliche Länge aufweist.

3. Befestigungselement nach Anspruch 1 oder 2,
**dadurch gekennzeichnet,**
**daß** die Breite (b) des Spanngurts (2) auf die größte Schenkellänge (10.1) des ungleichschenkligen Dreiecks (10) abgestellt ist.

4. Befestigungselement nach einem der vorhergehenden Ansprüche,
**dadurch gekennzeichnet,**
**daß** die aneinandergrenzenden Bereiche der Schenkel (10.1; 10.2; 10.3) innen- und/oder außenseitig als Abrundungen (6i; 6a) ausgebildet sind.

5. Befestigungselement nach einem oder mehreren der vorhergehenden Ansprüche,
**dadurch gekennzeichnet,**
**daß** das ungleichschenklige Dreieck (10) aus Flachblech besteht.

## Claims

1. Annular fastening element (1) between a strap (2) and a tensioning device (3), with the fastening element being arranged between a tensioning strap (2) of a vehicle tarpaulin (4) and a pivotable tensioning hook (5) of the tensioning device (3), **characterized in that** the fastening element (1) is formed as a triangle (10) that has unequal sides and is adjustable in relation to the tensioning strap (2), and **in that**, in each case, one side (10.1; 10.2; 10.3) of the ring is embraced by the tensioning strap (2), and the tensioning hook (5) can be engaged into the opposing point (S1; S2; S3) of the triangle.

2. Fastening element according to claim 1, **characterized in that** each side (10.1; 10.2; 10.3) of the triangle (10) that has unequal sides is of a different length.

3. Fastening element according to claim 1 or 2, **characterized in that** the width (b) of the tensioning strap (2) is adapted to suit the greatest side length (10.1) of the triangle (10) that has unequal sides.

4. Fastening element according to one of the preceding claims, **characterized in that** the adjacent regions of the sides (10.1; 10.2; 10.3) are formed, on the inside and/or outside, as rounded-off portions (6i; 6a).

5. Fastening element according to one or more of the preceding claims, **characterized in that** the triangle (10) that has unequal sides is made of flat sheet metal.

## Revendications

1. Elément de fixation en forme de boucle (1) entre une sangle (2) et un dispositif de serrage (3), l'élément de fixation étant disposé entre une sangle de serrage (2) d'une bâche de véhicule (4) et un crochet de serrage (5) du dispositif de serrage (3), qui peut être pivoté,
**caractérisé en ce que**
l'élément de fixation (1) est agencé sous la forme d'un triangle scalène (10) réglable par rapport à la sangle de serrage (2), et **en ce que**,
à chaque fois, un côté (10.1 ; 10.2 ; 10.3) de la boucle est entouré par la sangle de serrage (2) et le crochet de serrage (5) peut être introduit dans l'angle (S1 ; S2 ; S3) opposé du triangle.

2. Elément de fixation selon la revendication 1,
**caractérisé en ce que**
chaque côté (10.1 ; 10.2 ; 10.3) du triangle scalène (10) présente une longueur différente.

3. Elément de fixation selon la revendication 1 ou la revendication 2,
**caractérisé en ce que**
la largeur (b) de la sangle de serrage (2) est adaptée à la plus grande longueur de côté (10.1) du triangle scalène (10).

4. Elément de fixation selon l'une quelconque des revendications précédentes,
**caractérisé en ce que**
les régions adjacentes des côtés (10.1 ; 10.2 ; 10.3) sont en forme arrondie (6i, 6a) du côté intérieur et/ou extérieur.

5. Elément de fixation selon l'une quelconque des revendications précédentes,
**caractérisé en ce que**
le triangle scalène (10) est constitué de tôle plate.
